# FASCICULE DE BREVET EUROPEEN

(11) **EP 4 562 106 B1**
(45) Date de publication et mention de la délivrance du brevet: **13.05.2026**
(21) Numéro de dépôt: 23755460.5
(22) Date de dépôt: 24.07.2023
(51) Int. Cl.: C09J 123/20, C08L 57/02, C08L 23/14, B32B 27/08, B32B 27/32

(54) **AUTO-ADHESIFS THERMOFUSIBLES POUR EMBALLAGE REFERMABLE**
HEISSSCHMELZENDE DRUCKEMPFINDLICHE KLEBSTOFFE FÜR WIEDERVERSCHLIESSBARE VERPACKUNGEN
HOT-MELT PRESSURE-SENSITIVE ADHESIVES FOR RESEALABLE PACKAGING

(30) Priorité: 27.07.2022 FR 2207723; 08.09.2022 FR 2208976
(43) Date de publication de la demande: 04.06.2025
(73) Titulaire: Bostik SA, 92800 Puteaux (FR)
(72) Inventeur: ROBERT, Christophe, 60280 Venette (FR); WIEGERT, Barbara, 92700 Colombes (FR)
(74) Mandataire: Arkema Patent
(86) Numéro de dépôt international: PCT/FR2023/051149
(87) Numéro de publication internationale: WO 2024/023433

(56) Documents cités:
- EP-A1- 3 260 512
- WO-A1-2021/127351
- US-A1- 2013 202 836

## Description

### DOMAINE DE L'INVENTION

La présente invention a pour objet une nouvelle composition auto-adhésive thermofusible, ainsi qu'un film multicouche destiné à la fabrication d'emballages (ou barquettes) refermables, qui comprend une couche adhésive constituée par ladite composition.

### ARRIERE-PLAN TECHNOLOGIQUE

Les barquettes refermables sont utilisées dans l'industrie agroalimentaire et la grande distribution pour conditionner des denrées alimentaires, notamment des produits frais. De tels emballages sont décrits par le brevet US 4673601 et la demande de brevet EP 1053952 (et WO2021127351A1, EP3260512A1 et US2013202836A1).

Après une première ouverture de l'emballage et consommation d'une partie du produit alimentaire qu'il contient, l'utilisateur peut manuellement refermer l'emballage de façon substantiellement hermétique et assurer par conséquent, le cas échéant après mise au réfrigérateur, la conservation de la portion restante du produit. Une succession de réouvertures et de refermetures est également possible.

Ces emballages comprennent en général un contenant (ou réceptacle) et un opercule formant couvercle, qui sont fixés l'un à l'autre hermétiquement par soudage.

Le réceptacle, plus ou moins profond et relativement rigide, est constitué d'une feuille multicouche (dite également complexe ou composite) ayant une épaisseur minimale de 200 µm, en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par soudure à l'opercule, souple et plan, qui est constitué d'un film multicouche (qualifié également de complexe ou composite) d'épaisseur en général comprise entre 40 et 150 µm, et qui est désigné parfois par la dénomination de film d'operculage.

Lors de l'ouverture de l'emballage, le film d'operculage est séparé manuellement du réceptacle au niveau de la bande plane du pourtour. Cette opération laisse apparaître une couche adhésive au niveau de cette bande plane, tant sur la bande d'opercule que sur la bande de réceptacle qui étaient précédemment en contact. Ces 2 couches adhésives (continues ou discontinues) « dites filles » résultent de la rupture d'une couche adhésive initiale ou « mère » ou, éventuellement, de sa séparation (ou décollement) de l'une des 2 couches du film complexe multicouche qui lui sont adjacentes. La couche adhésive initiale est donc une des couches dudit film complexe multicouche qui est lui-même un élément compris soit dans la feuille composite qui constitue le réceptacle soit, éventuellement, dans le film d'operculage.

Les 2 couches adhésives filles qui sont présentes, après ouverture de l'emballage, sur les bandes situées sur le pourtour respectif du réceptacle et de l'opercule sont donc en regard l'une de l'autre. Ainsi, il suffit de repositionner l'opercule sur le réceptacle, conformément à leur position dans l'emballage avant ouverture, afin de remettre en contact les 2 bandes de couches adhésives filles. Une simple pression manuelle permet alors d'obtenir la refermeture de l'emballage.

La composition adhésive qui constitue les couches adhésives mère et filles est donc nécessairement un adhésif sensible à la pression (également dénommé auto-adhésif ou encore PSA, de l'anglais « Pressure Sensitive Adhesive »).

Les compositions auto-adhésives thermofusibles comprennent typiquement des résines tackifiantes et des copolymères blocs styréniques incluant un bloc élastomère. Les compositions adhésives thermofusibles sont également dénommées couramment HMPSA correspondant aux initiales de la traduction anglaise « Hot Melt Pressure Sensitive Adhesive ». Ce sont des substances solides à température ambiante qui ne contiennent ni eau ni solvant. Appliquées à l'état fondu, elles se solidifient lors de leur refroidissement, formant ainsi une couche adhésive qui assure la liaison entre les 2 couches minces de matériau polymérique thermoplastique à assembler, tout en offrant à l'emballage correspondant les propriétés avantageuses d'ouverture et de refermeture.

Un phénomène de « stick-slip » (communément appelé « collé-glissé ») peut être observé lors du pelage de l'adhésif pendant l'ouverture de l'emballage. Ce mouvement saccadé, qui créé des à-coups, engendre une sensation désagréable pour le consommateur qui préfère une ouverture en douceur et uniforme de l'emballage. La qualité de la rupture de l'adhésif est donc un paramètre important qui impacte le ressenti du consommateur.

Il existe donc un besoin d'une composition auto-adhésive thermofusible permettant de remédier au moins en partie à au moins l'un des inconvénients susmentionnés.

Il existe notamment un besoin d'une composition auto-adhésive thermofusible présentant un bon compromis entre propriétés adhésives et qualité de la rupture. En particulier, il existe un besoin d'une composition auto-adhésive thermofusible présentant un bon compromis entre une force de première ouverture suffisante, une force de refermeture maximale, et une bonne qualité de la rupture adhésive.

### DESCRIPTION DE L'INVENTION

### COMPOSITION

La présente invention concerne une composition auto-adhésive thermofusible comprenant :
- i) de 40% à 80% en poids d'au moins un copolymère A but-1-ène-ethylène, ledit copolymère comprenant plus de 80% en poids d'unités dérivées de but-1-ène ;
- ii) de 1,5% à 4,5% en poids d'au moins un copolymère T propylène-éthylène-butène, ledit copolymère T comprenant plus de 50% en poids d'unités dérivées de propylène ;
- iii) au moins une résine tackifiante non hydrogénée obtenue par polymérisation, ou copolymérisation avec un hydrocarbure aromatique, de mélanges d'hydrocarbures aliphatiques insaturés ayant de 4 à 6 atomes de carbone issus de coupes pétrolières.

Les pourcentages en poids des ingrédients sont par rapport au poids total de ladite composition auto-adhésive thermofusible.

Dans le cadre de la présente invention, le terme « copolymère » fait référence à un polymère obtenu par la polymérisation d'au moins deux monomères différents. Le terme « copolymère » inclus les terpolymères qui comprennent trois types de monomères différents.

Sauf indication contraire, les normes mentionnées dans toute la demande sont celles en vigueur à la date de dépôt de la demande.

### Copolymère A

La composition auto-adhésive thermofusible comprend de préférence de 45% à 80% en poids de copolymère(s) A, encore plus préférentiellement de 50% à 80% en poids par rapport au poids total de ladite composition. De façon encore plus préférée, la composition comprend de 50% à 70% en poids de copolymère(s) A par rapport au poids total de ladite composition.

Le copolymère A peut avoir une densité inférieure allant de 0,800 à 0,899 g/cm³, de préférence de 0,850 à 0,895 g/cm³, et encore plus préférentiellement de 0,860 à 0,880 g/cm³.

La densité peut être mesurée selon la norme ISO 1183-1.

Le copolymère A peut avoir une dureté shore A inférieure ou égale à 90, de préférence inférieure ou égale à 70, et encore plus préférentiellement inférieure ou égale à 65.

La dureté shore A peut être mesurée selon la norme ISO 868.

Le copolymère A peut avoir un indice de polydispersité (Mw/Mn) inférieur ou égale à 3, de préférence allant de 2 à 3.

L'indice de polydispersité peut être mesuré par chromatographie d'exclusion stérique (SEC), par exemple en utilisant un étalon de type polystyrène.

Le copolymère A comprend de préférence plus de 82% en poids d'unités dérivées de but-1-ène, et encore plus préférentiellement plus de 90% en poids d'unités dérivées de but-1-ène.

Le copolymère A peut comprendre au plus 20% en poids d'unités dérivées d'éthylène, de préférence au plus 18% en poids d'unités dérivées d'éthylène, et encore plus préférentiellement au plus 10% en poids d'unités dérivées d'éthylène.

Les pourcentages en poids d'unités monomères sont par rapport au poids total dudit copolymère A.

Le pourcentage en poids d'unités monomères peut être déterminée par toute méthode connue, tel que par exemple par RMN.

Le copolymère A est de préférence obtenu par polymérisation en présence de catalyseurs de type métallocène qui sont bien connus dans le domaine.

Le copolymère A peut également être disponible commercialement. On peut par exemple citer le polymère Koattro^{®} KT MR06 commercialisé par LYONDELLBASELL qui est un copolymère C2/C4 ayant un MFI à 190°C, 2,16 kg de 1,3 g/10 min et comprenant une teneur massique en éthylène C2 d'environ 8,3%.

### Copolymère T

La composition auto-adhésive thermofusible comprend de préférence de 1,8 à 4,3% en poids de copolymère(s) T, préférentiellement de 2,0 à 4,0%, et encore plus préférentiellement de 2,0 à 3,5 % en poids par rapport au poids total de ladite composition.

Le copolymère T peut être obtenu par polymérisation en présence de catalyseur de type métallocène ou Ziegler-Natta qui sont bien connus dans le domaine.

Un copolymère T peut aussi être disponible dans le commerce, tel que l'ADSYL^{®} 7622 XCP commercialisé par LYONDELLBASELL comprenant plus de 50% en poids d'unités dérivées de propylène et ayant une température de fusion de 132°C ainsi qu' un MFI à 230°C, 2,16kg de 5,6 g/10 min.

Le copolymère T comprend de préférence plus de 60% en poids d'unités dérivées de propylène, plus préférentiellement plus de 70% en poids d'unités dérivées de propylène, et encore plus préférentiellement plus de 80% en poids d'unités dérivées de propylène.

Le copolymère T peut comprendre de 1% à 25% en poids d'unités dérivées d'éthylène, de préférence de 1% à 10% en poids d'unités dérivées d'éthylène, et encore plus préférentiellement de 1% à 5% en poids d'unités dérivées d'éthylène.

Le copolymère T peut comprendre de 1% à 25% en poids d'unités dérivées de butène, de préférence de 2% à 15% en poids d'unités dérivées de butène, et encore plus préférentiellement de 5% à 12% en poids d'unités dérivées de butène.

Les pourcentages en poids d'unités monomères sont par rapport au poids total dudit copolymère T.

Le pourcentage en poids d'unités monomères peut être déterminée par toute méthode connue, tel que par exemple par RMN.

Le copolymère T est de préférence cristallin.

Le copolymère T a de préférence une température de fusion mesurée par DSC (« Differential Scanning Calorimetry ») allant de 130°C à 160°C.

Le copolymère T a de préférence un indice d'écoulement (ou MFI) allant de 0,6 à 10 g/10min, de préférence de 2 à 10 g/10 min, et encore plus préférentiellement de 4 à 8 g/10 min.

L'indice d'écoulement (ou Melt Flow Index MFI) du copolymère T est mesuré à 230°C et sous un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre fixé, sous l'effet d'une pression exercée par un piston chargé ayant le poids total de 2,16 kg.

### Résine tackifiante iii)

La composition auto-adhésive thermofusible selon l'invention comprend au moins une résine tackifiante iii) non hydrogénée obtenue par polymérisation (ou copolymérisation avec un hydrocarbure aromatique) de mélanges d'hydrocarbures aliphatiques insaturés ayant de 4 à 6 atomes de carbone (de préférence environ 5 atomes de carbone) issus de coupes pétrolières.

Lorsque la résine tackifiante est obtenue par copolymérisation de mélanges d'hydrocarbures aliphatiques insaturés ayant de 4 à 6 atomes de carbone avec un hydrocarbure aromatique, il s'agit notamment de résines aliphatiques modifiées aromatiques. Il est bien connu de l'homme du métier que la teneur en radicaux aliphatiques est supérieure à celle en radicaux aromatiques dans des résines aliphatiques modifiée aromatiques.

De préférence, la résine tackifiante iii) non hydrogénée est obtenue par polymérisation de mélanges d'hydrocarbures aliphatiques insaturés ayant de 4 à 6 atomes de carbone issus de coupes pétrolières.

La résine tackifiante iii) peut avoir une température (ou point) de ramollissement allant de 25° à 150°C, de préférence de 30° à 130°C, plus préférentiellement de 50°C à 120°C, et encore plus préférentiellement de 90° à 120°C.

La température de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

La résine tackifiante iii) peut avoir une masse molaire moyenne en poids M_{w} généralement comprise entre 300 et 5000 Da, de préférence entre 1000 et 2000 Da.

Parmi les résines tackifiantes iii), on peut par exemple citer l'Escorez^{®} 1310LC commercialisée par EXXONMOBIL CHEMICAL (Température de ramollissement de 94°C et une Mw d'environ 1800 Da) ou encore la Wingtack^{®} 98 commercialisée par CRAY VALLEY (Température de ramollissement de 98°C et une Mw d'environ 2000 Da).

La composition selon l'invention peut comprendre une teneur totale en résine(s) tackifiante(s) iii) allant de 18,5 à 58,5% en poids, de préférence de 18,5 à 53,5 % en poids, préférentiellement de 18,5 à 48,5% poids, et encore plus préférentiellement de 28,5% à 48,5 % par rapport au poids total de ladite composition.

La composition auto-adhésive thermofusible peut comprendre une résine tackifiante iii) telle que définie ci-dessus, ou un mélange de résines tackifiantes iii) telles que définies ci-dessus.

### Résine tackifiante optionnelle iv)

La composition auto-adhésive thermofusible peut également comprendre en outre une ou plusieurs résine(s) tackifiante(s) iv) différente(s) de la résine iii) telle que définie ci-dessus.

La résine tackifiante iv) peut être choisie parmi celles ayant une masse molaire moyenne en poids M_{w} comprise entre 300 et 5000 Da.

La ou les résines tackifiantes iv) peuvent être choisies notamment parmi :
- iv-a) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- iv-b) des résines obtenues par hydrogénation, polymérisation ou copolymérisation (avec un hydrocarbure aromatique) de mélanges d'hydrocarbures aliphatiques insaturés ayant environ 9 ou 10 atomes de carbone issus de coupes pétrolières.

Parmi les résines tackifiantes (iv-a), on peut par exemple citer la Sylvalite^{®} RE 100S de la société Kraton Polymers (ester de collophane et de pentaérythritol ayant une température de ramollissement d'environ 100°C).

Parmi les résines tackifiantes (iv-b), on peut par exemple citer l'Escorez^{®} 5400 commercialisé par la société ExxonMobil Chemical qui est une résine obtenue par polymérisation, puis hydrogénation d'un mélange d'hydrocarbures aliphatiques insaturés ayant environ 9 ou 10 atomes de carbone et qui possède une température de ramollissement de 100°C et une Mw d'environ 570 Da.

De préférence, la composition auto-adhésive thermofusible de l'invention ne comprend pas de résine tackifiante choisie parmi les résines terpéniques (résines terpènes).

Les résines terpéniques couvrent notamment les résines terpéniques non modifiées, les résines terpéniques modifiées par action de phénols (résines terpènes-phénols) ainsi que les résines terpéniques issues de copolymérisation (par exemple styrène/terpène). Les résines terpéniques peuvent résulter de la polymérisation d'hydrocarbures terpéniques comme par exemple le mono-terpène (ou pinène), en présence notamment de catalyseurs de Friedel-Crafts. Parmi les résines terpéniques sont notamment connues la Dercolyte^{®} S115 disponible auprès de la société DRT (résine terpénique ayant une température de ramollissement de 115°C et un Mw d'environ 2300 Da, ou encore la Sylvares^{®} TR7115 de Kraton Polymers.

Selon un mode de réalisation préféré, la composition selon l'invention ne comprend pas d'autre résine tackifiante que la(les) résine(s) tackifiante(s) iii) susmentionnée(s).

Selon un mode de réalisation préféré, la composition auto-adhésive thermofusible ne comprend pas de résines aromatiques hydrogénées en C9.

### Composants additionnels/optionnels

De préférence, la composition auto-adhésive thermofusible selon l'invention comprend moins de 0,1% en poids de copolymère bloc styrénique (SBC), encore plus préférentiellement moins de 0,05% en poids par rapport au poids total de ladite composition. Encore plus avantageusement, la composition auto-adhésive thermofusible ne comprend pas de copolymère bloc styrénique.

Les copolymères blocs styréniques sont constitués de blocs de différents monomères polymérisés incluant au moins un bloc polystyrène, et sont typiquement préparés par des techniques de polymérisation radicalaire.

Selon un mode de réalisation, la composition auto-adhésive thermofusible susmentionnée est constituée de :
- i) de 45% à 80% en poids d'au moins un copolymère A tel que défini ci-dessus ;
- ii) de 1,5% à 4,5% en poids d'au moins un copolymère T tel que défini ci-dessus ;
- iii) au moins une résine tackifiante non hydrogénée obtenue par polymérisation, ou copolymérisation avec un hydrocarbure aromatique, de mélanges d'hydrocarbures aliphatiques insaturés ayant de 4 à 6 atomes de carbone issus de coupes pétrolières ;
- de 0% à 5% en poids de composant additionnel choisi dans le groupe constitué des stabilisants (antioxydants), des plastifiants, des agents anti-mottants, des pigments, des colorants, des charges organiques, des charges minérales, et de leurs mélanges.

La quantité totale en composant(s) additionnel(s) peut aller de 0,01% à 2% en poids, de préférence de 0,1% à 2% en poids par rapport au poids total de ladite composition.

Les antioxydants peuvent être typiquement introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des antioxydants primaires qui piègent les radicaux libres et sont généralement des phénols substitués comme l'Irganox^{®} 1010 de BASF. Les antioxydants primaires peuvent être utilisés seuls ou en combinaison avec d'autres antioxydants tels que des phosphites comme l'Irgafos^{®} 168 également de BASF, ou encore avec des stabilisants UV tels que des amines.

Les agents anti-mottants peuvent être choisis parmi le talc, le carbonate de calcium, le stéarate de calcium, la silice (naturelle ou synthétique) ou leurs mélanges.

On peut utiliser comme plastifiant une huile paraffinique et naphténique (comme le Primol^{®} 352 de la société EXXONMOBIL) comprenant éventuellement des composés aromatiques (comme le Nyflex^{®} 222B).

Selon un mode de réalisation préféré, la composition auto-adhésive thermofusible susmentionnée comprend :
- i) de 45% à 80% en poids d'au moins un copolymère A tel que défini ci-dessus ;
- ii) de 2,0% à 4,0% en poids d'au moins un copolymère T tel que défini ci-dessus ;
- iii) au moins une résine tackifiante non hydrogénée obtenue par polymérisation, ou copolymérisation avec un hydrocarbure aromatique, de mélanges d'hydrocarbures aliphatiques insaturés ayant de 4 à 6 atomes de carbone issus de coupes pétrolières ;
- de 0% à 5% en poids de composant additionnel choisi dans le groupe constitué des stabilisants (antioxydants), des plastifiants, des agents anti-mottants, des pigments, des colorants, des charges organiques, des charges minérales, et de leurs mélanges.

### Composition

La composition auto-adhésive thermofusible peut avoir une teneur totale en polymères (copolymère A + copolymère T) allant de 41,5% à 84,5 %, de préférence de 46,8% à 84,3%, plus préférentiellement de 52% à 84%, et encore plus préférentiellement de 52 % à 73,5%.

La composition auto-adhésive thermofusible peut comprendre un ratio massique polymères (copolymère A + copolymère T) : Résine(s) tackifiante(s) iii) allant de 40 : 60 à 90 : 10, de préférence de 45 : 55 à 85 : 15, encore plus préférentiellement de 50 : 50 à 70 : 30.

La composition auto-adhésive thermofusible selon l'invention peut avoir un indice d'écoulement (ou MFI) allant de 5 à 50 g/10min, de préférence de 5 à 20 g/10 min, et encore plus préférentiellement de 5 à 15 g/10 min.

L'indice d'écoulement (ou Melt Flow Index MFI) de la composition auto-adhésive thermofusible est mesuré à 190°C et sous un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre fixé, sous l'effet d'une pression exercée par un piston chargé ayant le poids total de 2,16 kg. En l'absence de mention contraire les valeurs de MFI indiquées dans le présent texte ont été mesurées dans ces mêmes conditions.

La composition auto-adhésive thermofusible selon l'invention se présente de préférence sous la forme de granulés de forme ellipsoidale dont les dimensions moyennes du grand axe et du petit axe sont avantageusement les suivantes :
- dimension moyenne du grand axe comprise entre 1 et 10 mm, de préférence entre 2 et 6 mm ;
- dimension moyenne du petit axe comprise entre 1 et 10 mm, de préférence entre 2 et 6 mm.

Les dimensions moyennes sont typiquement calculées en faisant la moyenne sur dix mesures.

La mesure des dimensions du grand axe et du petit axe des granulés peut se faire à l'aide d'un pied à coulisse.

La composition auto-adhésive thermofusible peut être préparée sous cette forme par un procédé qui comprend :
- une étape de mélange des ingrédients à chaud, entre 150°C et 220°C, au moyen d'une extrudeuse bi-vis munie d'un outil de découpe du produit extrudé du type coupe sous eau en sortie de la filière, puis
- une étape de séchage et refroidissement, par exemple à température ambiante (23°C).

Le procédé peut comprendre une étape de pré-mélange à chaud des copolymères A et T tels que définis ci-dessus, puis ladite étape de mélange des ingrédients (du pré-mélange avec les autres ingrédients tels que par exemple la résine tackifiante) à chaud entre 150°C et 250°C, au moyen d'une extrudeuse bi-vis munie d'un outil de découpe du produit extrudé du type coupe sous eau en sortie de la filière.

### FILMS MULTICOUCHES

La présente invention concerne également un film multicouche comprenant 2 couches minces B et C de matériau thermoplastique liées entre elles par une couche adhésive A, caractérisé en ce que ladite couche A est constituée par la composition auto-adhésive thermofusible telle que définie précédemment.

La couche adhésive A assure de préférence la liaison entre une couche mince complexable B et une couche mince scellable et sécable C.

L'épaisseur de la couche adhésive A peut être comprise entre 7 et 50 µm, de préférence comprise entre 7 et 35 µm, et encore plus préférentiellement comprise entre 7 et 25 µm.

La couche complexable B peut être complexée (ou contre-collée) avec d'autres couches pour la réalisation de l'emballage, par exemple avec une couche rigide pour la réalisation du réceptacle.

La couche scellable et sécable C permet d'assurer, au niveau du pourtour le long duquel le réceptacle est lié par soudure à l'opercule, la première ouverture de l'emballage, au moyen d'une zone fragilisée sécable. Après ouverture, la zone fragilisée laisse apparaître :
- la couche adhésive mère sur la bande d'opercule et/ou sur la bande de réceptacle qui étaient en contact dans l'emballage fermé, et/ou
- 2 couches adhésives filles résultant de la rupture de la couche adhésive mère et localisées sur la bande d'opercule et/ou la bande de réceptacle.

Le matériau utilisable pour constituer les 2 couches B et C peut être un polymère thermoplastique (identique ou différent pour les 2 couches) tel que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère d'acide lactique (PLA), ou
- un polyhydroxyalkanoate (PHA).

Le terme « copolymère » correspond à un polymère obtenu par polymérisation d'au moins deux monomères différents. Le terme « copolymère » inclus notamment les terpolymères.

On préfère utiliser pour constituer les 2 couches B et C un matériau polyoléfinique, et tout particulièrement le PE, et encore plus préférentiellement un PE à basse densité (également désigné par l'appellation anglaise de Low Density PolyEthylene ou LDPE).

L'épaisseur des couches B et C peut varier dans un large domaine allant de 5 à 150 µm.

Le film multicouche selon l'invention peut comprendre, outre les couches A, B et C, une ou plusieurs couches additionnelles. Il peut par exemple s'agir de couches de liaison, ou de couches à effet barrière (par exemple contre l'oxygène, vapeur d'eau ou monoxyde de carbone), ou encore des couches permettant une résistance mécanique améliorée.

Ces couches additionnelles peuvent être reliées à la couche adhésive directement, ou se trouver entre une couche B (ou C) et une autre couche additionnelle.

Les couches de liaison sont également désignées par l'appellation de « couches intermédiaires » ou par le terme anglais de « tie layers » et ont généralement une épaisseur comprise entre 1 et 10 µm, de préférence entre 2 et 8 µm. L'utilisation de telles couches de liaison permet avantageusement d'améliorer la qualité de la refermeture du film multicouche, et donc de l'emballage refermable correspondant, assurant ainsi au consommateur de manière plus efficace la conservation de la portion restante du produit alimentaire périssable contenu dans l'emballage, après la première ouverture de ce dernier.

Les couches de liaison sont avantageusement constituées de compositions, identiques ou différentes, ayant une température de fusion d'environ 80 à 160°C et comprenant essentiellement des polymères choisis parmi des homopolymères ou copolymères d'éthylène, des homopolymères ou copolymères de propylène, des copolymères d'éthylène avec un comonomère polaire, et des homopolymères ou copolymères d'oléfines greffés (par exemple avec l'anhydride maléïque). Il est fait référence pour de plus amples précisions sur ces compositions à la demande de brevet US2013/0029553.

Les couches à effet barrière peuvent être à base de copolymère d'éthylène et d'alcool vinylique EVOH.

Les couches permettant une résistance mécanique améliorée peuvent être à base de polyamide (PA), PVDF, et leurs mélanges.

Le film multicouche selon l'invention peut comprendre, outre les 3 couches essentielles A, B et C, et des couches optionnelles additionnelles, d'autres couches minces nécessaires à la réalisation de l'emballage, comme par exemple :
- une couche rigide nécessaire à la tenue mécanique du réceptacle, ou
- une couche imprimable..

Les matériaux utilisables pour constituer lesdites couches peuvent être identiques ou différents et comprennent en général des polymères thermoplastiques qui peuvent être choisis parmi les polymères cités précédemment pour les couches B et C.

Selon une variante de réalisation, le film multicouche selon l'invention est un film à 3 couches constitué par la couche adhésive A et les 2 couches B et C, selon l'enchaînement B/A/C/ dans lequel le signe «/» signifie que les faces des couches concernées sont en contact direct.

Selon une autre variante de réalisation, le film multicouche selon l'invention est un film à 5 couches constitué par la couche adhésive A, 2 couches additionnelles D et E et 2 couches externes B et C, selon l'enchaînement B/D/A/E/C dans lequel le signe «/» signifie que les faces des couches concernées sont en contact direct.

Selon une autre variante de réalisation, le film multicouche selon l'invention est un film au moins 6 couches comprenant la couche adhésive A, les couches additionnelles D et E, une couches mince F, et les 2 couches externes B et C, selon l'enchainement B/D/F/E/A/C.

La présente invention concerne également un procédé de fabrication du film multicouche tel que défini précédemment, caractérisé en ce qu'il comprend une étape de co-extrusion de la composition auto-adhésive thermofusible et des matériaux constitutifs des couches B et C et, le cas échéant, des couches additionnelles.

De préférence, les compositions et matériaux constitutifs des couches A, B, C et, le cas échéant, D et E sont alimentés dans le dispositif de co-extrusion sous la forme de granulés de dimensions mentionnées précédemment. Ainsi, la composition auto-adhésive thermofusible mise en œuvre dans le film multicouche selon l'invention permet, de façon particulièrement avantageuse, d'assurer à la fois les propriétés requises pour ledit film et la possibilité d'une présentation de ladite composition adhésive sous la forme des granulés précités. Les autres couches éventuellement comprises dans le film multicouche peuvent être obtenues soit par l'incorporation dans le dispositif de co-extrusion des matériaux constitutifs correspondants sous la forme de granulés de même taille (comme par exemple pour les couches additionnelles D et E), soit par un procédé de complexage du film directement issu de la co-extrusion, mettant en œuvre par exemple un adhésif à base de polyuréthane.

Le dispositif de co-extrusion mis en œuvre dans le procédé de fabrication est de préférence un dispositif de co-extrusion par soufflage de bulle (également connu sous la dénomination de « co-extrusion par soufflage de gaine »). De façon connue de l'homme du métier, ce procédé comprend :
- la fusion, dans des extrudeuses séparées, des compositions et matériaux constitutifs des couches A, B et C, ainsi que, le cas échéant, D et E, puis
- le passage des flux correspondants à travers un ensemble de filières annulaires et concentriques, de manière à former une bulle tubulaire à plusieurs couches, dans l'ordre correspondant à celui désiré pour la structure finale, puis
- l'expansion radiale (relativement à la filière annulaire) et l'étirement (dans le sens axial) de la bulle, puis
- le refroidissement de la bulle.

Les caractéristiques géométriques des filières, de même que les paramètres du procédé tels que le taux d'expansion radiale et la vitesse d'étirement sont fixés de manière à obtenir l'épaisseur désirée pour les différentes couches constitutives du film multicouche. Il est notamment fait référence pour plus ample description du procédé de co-extrusion par soufflage de bulle à la demande de brevet US2013/0029553.

La composition auto-adhésive thermofusible selon l'invention présente avantageusement un bon compromis entre propriétés adhésives et bonne qualité de la rupture. En particulier, la composition auto-adhésive thermofusible présente avantageusement un bon compromis entre :
- une force de première ouverture suffisante (de préférence inférieure ou égale à 5 N/cm, encore plus préférentiellement inférieure ou égale à 4,8 N/cm),
- une force de refermeture maximale, notamment une force de 5ème ouverture maximale (par exemple supérieure ou égale à 0,6 N/cm), et
- une bonne qualité de la rupture (phénomène stick-slip réduit).

### UTILISATIONS

La présente invention concerne également l'utilisation du film multicouche tel que décrit précédemment pour la fabrication d'emballages refermables.

L'utilisation pour la fabrication de barquettes refermables est particulièrement avantageuse, et selon un mode de réalisation particulièrement préféré pour la fabrication du film d'operculage de ces barquettes.

Dans le cadre de l'invention, par « comprise entre x et y », ou « allant de x à y », on entend un intervalle dans lequel les bornes x et y sont incluses. Par exemple, la gamme «comprise entre 1 et 10 » inclus notamment les valeurs 1 et 10.

Les exemples suivants sont donnés à titre purement illustratif de l'invention, et ne sauraient en aucun cas être interprétés pour en limiter la portée.

### EXEMPLES

### Ingrédients utilisés :

Escorez^{®} 1310 LC : Résine tackifiante non hydrogénée obtenue par polymérisation de mélange d'hydrocarbures aliphatiques insaturés ayant environ 5 atomes de carbone issus de coupes pétrolières. Elle présente une température de ramollissement de 94°C (fournisseur EXXONMOBIL CHEMICAL)
SONGNOX^{®} 1010 (fournisseur SONGWON) : Antioxydant primaire
LDPE grade LD0304 : polyéthylène basse densité fabriqué en autoclave haute pression ayant un MFI à 190°C sous 2.16 kg de 4 g/10 min) (fournisseur TOTAL)
KOATTRO^{®} KT MR06 : copolymère C2/C4 ayant un MFI à 190°C, 2,16 kg de 1,3 g/10 min et comprenant une teneur massique en éthylène C2 d'environ 8,3% (fournisseur LYONDELL BASELL)
Terpolymère T : C2/C3/C4 comprenant environ 3% en poids de C2, 9% en poids de C4, le reste étant du C3 et ayant un MFI à 230°C sous 2,16 kg de 5,50 g/10 min
Regalite^{®} S1100 : Résine tackifiante hydrogénée issus de mélanges d'hydrocarbures aromatiques en C9. Elle présente une température de ramollissement de 100°C. (fournisseur EASTMAN CHEMICAL)

### Exemple 1 : Préparation des compositions adhésives

Les compositions adhésives (cf tableau 1) sont d'abord préparées sous la forme de granulés de forme ellipsoïdale dont le grand axe et le petit axe ont respectivement une dimension moyenne comprise entre 1 et 10 mm, de préférence entre 2 et 6 mm, par mélange de leurs ingrédients à une température allant de 150°C à 200°C au moyen d'une extrudeuse à 2 vis, extrusion à travers une filière puis découpe du produit à l'aide d'un outil de granulation type coupe sous eau puis séchage et refroidissement à température ambiante (23°C). Le tableau 1 indique des pourcentages en poids.

### Exemple 2 : préparation des films tricouches B/A/C comprenant une couche A de la composition de l'exemple 1

Ce film tricouche est fabriqué au moyen d'un dispositif pilote de co-extrusion par soufflage de bulle fonctionnant en continu, dans lequel 3 extrudeuses sont alimentées :
- pour l'une, par la composition de l'exemple 1 (composition n°1, n°2 ou n°3), et
- pour les 2 autres, par du LDPE.

Les paramètres du procédé sont ajustés de manière à fabriquer un film tricouche constitué :
- en tant que couche A, d'une couche d'épaisseur 15 µm constituée de la composition de l'exemple A,
- en tant que couche mince complexable B, d'une couche d'épaisseur 30 µm constituée de LDPE ;
- en tant que couche mince scellable et sécable C, d'une couche d'épaisseur 15 µm constituée également de LDPE.

Plusieurs paramètres usuels ont été fixés, à savoir un taux d'expansion radiale de la bulle à 3,18, une vitesse d'étirement de 7 m/minute et un débit global de 11 kg/heure.

Le film tricouche ainsi obtenu a une épaisseur totale de 60 µm, une longueur de 50 m et est conditionné sous la forme d'une bobine de 250 mm de laize.

Les différentes matières ont été introduites dans chaque extrudeuse, afin de remplir les vis et former la bulle de polymère à la sortie de la filière d'extrusion. Après 30 minutes de purge, les épaisseurs et stabilité de la bulle contrôlées, 50m de film ont été bobinés sur mandrins.

### Mesure de la force de première ouverture par pelage en T à 23°C :

On découpe dans le film tricouche B/A/C obtenu précédemment des éprouvettes rectangulaires E1 de 25 cm de longueur et 3 cm de largeur.

On utilise, par ailleurs, un film complexe PET/PE constitué d'une couche de PET d'épaisseur 23 µm qui est contrecollée par du polyuréthane (couche de 2 µm) sur une couche de PE de 50 µm d'épaisseur. On découpe dans ce film complexe des éprouvettes rectangulaires E2 de 25 cm de longueur et 3 cm de largeur.

Une éprouvette E1 est alors placée en regard entre 2 éprouvettes E2, les 3 éprouvettes étant superposées, de manière à ce que les couches B et C de E1 soit en contact avec la couche de PE de E2.

On procède alors à un scellage partiel, au moyen de deux mâchoires chauffantes à 130°C, appliquées sous une pression de 4,6 bar pendant 1 seconde, de manière à obtenir une zone scellée de forme rectangulaire (15 cm de longueur et 1 cm de largeur). Ladite zone scellée est disposée dans le sens de la longueur et se trouve au centre de l'assemblage des 3 éprouvettes superposées, de sorte que 5cm de films non scellés dépassent de part et d'autre dans le sens de la longueur, et 1cm de films non scellés dépassent de part et d'autre dans le sens de la largeur.

Les bandes de films libres situées d'un même côté de l'assemblage des 3 éprouvettes, par rapport à la zone scellée, sont fixées :
- à un premier dispositif d'attache (appelé mors) qui est relié à la partie fixe d'un appareil de traction, pour ce qui est de celle des 2 bandes E2 qui est face à la couche C de E1, et
- à un second mors relié à la partie mobile dudit appareil de traction, pour ce qui est de l'autre bande E2 et de la bande E1.

Les parties fixe et mobile de l'appareil de traction, qui est un dynamomètre, sont situées sur un même axe vertical.

Les 3 bandes ainsi fixées, permettent, par déplacement des mors du dynamomètre, de solliciter (ou peler) l'interface entre la couche C du film B/A/C constitutif de E1 et le PE de E2 qui lui fait face.

Alors qu'un mécanisme d'entraînement communique à la partie mobile une vitesse uniforme de 300 mm/minute conduisant au pelage des 3 éprouvettes E1 et E2 scellées, les extrémités se déplacent progressivement selon un axe vertical en formant un angle de 180°. Un capteur de force relié à ladite partie mobile mesure la force supportée par l'éprouvette ainsi maintenue. La mesure est réalisée dans une salle climatique maintenue à une température de 23°C.

La force obtenue est la force de première ouverture (en N/cm) et est indiquée dans le Tableau 1 suivant.

### Mesure de la force de cinquième ouverture par pelage en T à 23°C :

Les 2 parties de l'éprouvette précédente sont, après pelage, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On obtient ainsi une éprouvette de traction de forme identique à celle préparée pour le test de pelage précédent qui est alors répété.

Les deux étapes sont réalisées 4 fois jusqu'à obtenir la force de cinquième ouverture. Celle-ci est indiquée dans le Tableau 1 suivant.

### Détermination de la qualité de la rupture à 23°C

La qualité de la rupture a été déterminée en analysant la forme de la courbe de la force de pelage de l'éprouvette en fonction du temps :
Une rupture présentant un phénomène de « stick-slip » (communément appelé « collé-glissé ») est caractérisée par une courbe donnant la force de pelage en fonction du temps présentant des pics et des vallées caractéristiques d'une ouverture présentant un mouvement saccadé, qui créé des à-coups, qui se traduit par une sensation désagréable pour le consommateur lors du pelage de l'adhésif pendant l'ouverture de l'emballage.
Une rupture homogène est caractérisée par une courbe donnant la force de pelage en fonction du temps présentant un plateau substantiellement uniforme qui se traduit par une ouverture douce de l'emballage pour le consommateur.

**[Tableau 1]**

| | | **Composition n°1 (comparative)** | **Composition n°2 (invention)** | **Composition n°3 (invention)** |
|---|---|---|---|---|
| Terpolymère C2/C3/C4 | | 3,1 | 4,2 | 3,1 |
| Koattro^{®} KT MR 06 | | 56,6 | 55,5 | 56,6 |
| Regalite ^{®}S1100 | | 39,8 | - | - |
| | Escorez^{®} 1310LC | - | 39,8 | 39,8 |
| | SONGNOX^{®} 1010 SB (AO) | 0,5 | 0,5 | 0,5 |
| | | | | |
| | Total | 100 | 100 | 100 |
| | | | | |
| Composition auto-adhésive (exemple 1) | MFI (g/10min) | 10,4 | 11,0 | 11,5 |
| | | | | |
| | | | | |
| Film tricouche (exemple 2) | Qualité rupture | Stick-slip observé | Pas de stick-slip | Pas de stick-slip |
| | | | Ouverture homogène | Ouverture homogène |
| Film tricouche (exemple 2) | Force de pelage (N/cm) 1ère ouverture | 5,9 | 5,0 | 4,4 |
| Film tricouche (exemple 2) | Force de pelage (N/cm) 5ème ouverture | 0,5 | 0,6 | 0,8 |

Les compositions 2 et 3 selon l'invention conduisent avantageusement à un bon compromis entre force de pelage de 1^{ère} ouverture de 5,0 N/cm (composition 2) ou 4,4 N/cm (composition 3), force de 5^{ème} ouverture satisfaisante (0,6 et 0,8 N/cm), et ouverture homogène sans phénomène de stick-slip. En revanche, la composition comparative n°1 conduit à une qualité de la rupture non satisfaisante pour le consommateur en raison d'observation de phénomène stick-slip, et une force de 5^{ème} ouverture faible (0,5 N/cm).

## Revendications

1. Composition auto-adhésive thermofusible comprenant :
- i) de 40% à 80% en poids d'au moins un copolymère A but-1-ène-ethylène, ledit copolymère comprenant plus de 80% en poids d'unités dérivées de but-1-ène ;
- ii) de 1,5% à 4,5% en poids d'au moins un copolymère T propylène-éthylène-butène, ledit copolymère T comprenant plus de 50% en poids d'unités dérivées de propylène ;
- iii) au moins une résine tackifiante non hydrogénée obtenue par polymérisation, ou copolymérisation avec un hydrocarbure aromatique, de mélanges d'hydrocarbures aliphatiques insaturés ayant de 4 à 6 atomes de carbone issus de coupes pétrolières.

2. Composition selon la revendication 1, **caractérisée en ce qu'**elle comprend de 45% à 80% en poids de copolymère(s) A, de préférence de 50% à 80%, encore plus préférentiellement de 50% à 70% en poids de copolymère(s) A par rapport au poids total de ladite composition.

3. Composition selon l'une quelconque des revendications 1 ou 2, **caractérisée en ce que** le copolymère A a un indice de polydispersité (Mw/Mn) inférieur ou égale à 3, de préférence allant de 2 à 3.

4. Composition selon l'une quelconque des revendications 1 à 3, **caractérisée en ce que** le copolymère A a une dureté shore A inférieure ou égale à 90, de préférence inférieure ou égale à 70, et encore plus préférentiellement inférieure ou égale à 65.

5. Composition selon l'une quelconque des revendications 1 à 4, **caractérisée en ce que** le copolymère A comprend au plus 20% en poids d'unités dérivées d'éthylène, de préférence au plus 18% en poids d'unités dérivées d'éthylène, et encore plus préférentiellement au plus 10% en poids d'unités dérivées d'éthylène.

6. Composition selon l'une quelconque des revendications 1 à 5, **caractérisée en ce qu'**elle comprend de 1,8 à 4,3% en poids de copolymère(s) T, préférentiellement de 2,0 à 4,0%, et encore plus préférentiellement de 2,0 à 3,5 % en poids par rapport au poids total de ladite composition.

7. Composition selon l'une quelconque des revendications 1 à 6, **caractérisée en ce que** le copolymère T comprend plus de 60% en poids d'unités dérivées de propylène, plus préférentiellement plus de 70% en poids d'unités dérivées de propylène, et encore plus préférentiellement plus de 80% en poids d'unités dérivées de propylène.

8. Composition selon l'une quelconque des revendications 1 à 7, **caractérisée en ce que** le copolymère T peut comprendre de 1% à 25% en poids d'unités dérivées d'éthylène, de préférence de 1% à 10% en poids d'unités dérivées d'éthylène, et encore plus préférentiellement de 1% à 5% en poids d'unités dérivées d'éthylène.

9. Composition selon l'une quelconque des revendications 1 à 8, **caractérisée en ce que** le copolymère T comprend de 1% à 25% en poids d'unités dérivées de butène, de préférence de 2% à 15% en poids d'unités dérivées de butène, et encore plus préférentiellement de 5% à 12% en poids d'unités dérivées de butène.

10. Composition selon l'une quelconque des revendications 1 à 9, **caractérisée en ce que** la teneur totale en résine(s) tackifiante(s) iii) va de 18,5 à 58,5% en poids, de préférence de 18,5 à 53,5 % en poids, préférentiellement de 18,5 à 48,5% poids, et encore plus préférentiellement de 28,5% à 48,5 % par rapport au poids total de ladite composition.

11. Composition selon l'une quelconque des revendications 1 à 10, **caractérisée en ce qu'**elle ne comprend pas d'autre résine tackifiante que la(les) résine(s) tackifiante(s) iii).

12. Composition selon l'une quelconque des revendications 1 à 11, **caractérisée en ce qu'**elle se présente sous la forme de granulés de forme ellipsoidale dont les dimensions moyennes du grand axe et du petit axe sont de préférence les suivantes :
- dimension moyenne du grand axe comprise entre 1 et 10 mm, de préférence entre 2 et 6 mm ;
- dimension moyenne du petit axe comprise entre 1 et 10 mm, de préférence entre 2 et 6 mm.

13. Film multicouche comprenant 2 couches minces B et C de matériau thermoplastique liées entre elles par une couche adhésive A, **caractérisé en ce que** ladite couche A est constituée par la composition auto-adhésive thermofusible telle que définie dans l'une des revendications 1 à 12.

14. Film multicouche selon la revendication 13, **caractérisé en ce qu'**il comprend 5 couches constitué par la couche adhésive A, 2 couches additionnelles D et E, et les 2 couches minces B et C, selon l'enchaînement B/D/A/E/C dans lequel le signe «/» signifie que les faces des couches concernées sont en contact direct.

15. Utilisation du film multicouche tel que défini dans la revendication 13 ou 14, pour la fabrication d'emballages refermables.

## Patentansprüche

1. Heißschmelz-Haftkleberzusammensetzung, die Folgendes umfasst:
- i) 40 Gew.-% bis 80 Gew.-% mindestens eines But-1-en-Ethylen-Copolymers A, wobei das Copolymer mehr als 80 Gew.-% von But-1-en stammende Einheiten umfasst;
- ii) 1,5 Gew.-% bis 4,5 Gew.-% mindestens eines Propylen-Ethylen-Buten-Copolymers T, wobei das Copolymer T mehr als 50 Gew.-% von Propylen stammende Einheiten umfasst;
- iii) mindestens ein nicht hydriertes klebigmachendes Harz, das durch eine Polymerisation oder Copolymerisation von Mischungen von aus Erdölfraktionen stammenden ungesättigten aliphatischen Kohlenwasserstoffen mit 4 bis 6 Kohlenstoffatomen mit einem aromatischen Kohlenwasserstoff erhalten worden ist.

2. Zusammensetzung nach Anspruch 1, **dadurch gekennzeichnet, dass** sie 45 Gew.-% bis 80 Gew.-%, vorzugsweise 50 Gew.-% bis 80 Gew.-%, noch mehr bevorzugt 50 Gew.-% bis 70 Gew.-% Copolymer(e) A, bezogen auf das Gesamtgewicht der Zusammensetzung, umfasst.

3. Zusammensetzung nach einem der Ansprüche 1 oder 2, **dadurch gekennzeichnet, dass** das Copolymer A einen Polydispersitätsindex (Mw/Mn) kleiner als oder gleich 3, vorzugsweise von 2 bis 3, aufweist.

4. Zusammensetzung nach einem der Ansprüche 1 bis 3, **dadurch gekennzeichnet, dass** das Copolymer A eine Shore-A-Härte kleiner als oder gleich 90, vorzugsweise kleiner als oder gleich 70 und noch mehr bevorzugt kleiner als oder gleich 65, aufweist.

5. Zusammensetzung nach einem der Ansprüche 1 bis 4, **dadurch gekennzeichnet, dass** das Copolymer A höchstens 20 Gew.-% von Ethylen stammende Einheiten, vorzugsweise höchstens 18 Gew.-% von Ethylen stammende Einheiten und noch mehr bevorzugt höchstens 10 Gew.-% von Ethylen stammende Einheiten umfasst.

6. Zusammensetzung nach einem der Ansprüche 1 bis 5, **dadurch gekennzeichnet, dass** sie 1,8 bis 4,3 Gew.-%, vorzugsweise 2,0 bis 4,0 Gew.-% und noch mehr bevorzugt 2,0 bis 3,5 Gew.-%, Copolymer(e) T, bezogen auf das Gesamtgewicht der Zusammensetzung, umfasst.

7. Zusammensetzung nach einem der Ansprüche 1 bis 6, **dadurch gekennzeichnet, dass** das Copolymer T mehr als 60 Gew.-% von Propylen stammende Einheiten, stärker bevorzugt mehr als 70 Gew.-% von Propylen stammende Einheiten und noch mehr bevorzugt mehr als 80 Gew.-% von Propylen stammende Einheiten umfasst.

8. Zusammensetzung nach einem der Ansprüche 1 bis 7, **dadurch gekennzeichnet, dass** das Copolymer T 1 Gew.-% bis 25 Gew.-% von Ethylen stammende Einheiten, vorzugsweise 1 Gew.-% bis 10 Gew.-% von Ethylen stammende Einheiten und noch mehr bevorzugt höchstens 1 Gew.-% bis 5 Gew.-% von Ethylen stammende Einheiten umfassen kann.

9. Zusammensetzung nach einem der Ansprüche 1 bis 8, **dadurch gekennzeichnet, dass** das Copolymer T 1 Gew.-% bis 25 Gew.-% von Buten stammende Einheiten, vorzugsweise 2 Gew.-% bis 15 Gew.-% von Buten stammende Einheiten und noch mehr bevorzugt 5 Gew.-% bis 12 Gew.-% von Buten stammende Einheiten umfasst.

10. Zusammensetzung nach einem der Ansprüche 1 bis 9, **dadurch gekennzeichnet, dass** der Gesamtgehalt an klebrigmachendem Harz (klebrigmachenden Harzen) iii) 18,5 bis 58,5 Gew.-%, bevorzugt 18,5 bis 53,5 Gew.-%, vorzugsweise 18,5 bis 48,5 Gew.-% und noch mehr bevorzugt 28,5 % bis 48,5 %, bezogen auf das Gesamtgewicht der Zusammensetzung, beträgt.

11. Zusammensetzung nach einem der Ansprüche 1 bis 10, **dadurch gekennzeichnet, dass** sie kein anderes klebrigmachendes Harz als das klebrigmachende Harz (die klebrigmachenden Harze) iii) umfasst.

12. Zusammensetzung nach einem der Ansprüche 1 bis 11, **dadurch gekennzeichnet, dass** sie in Form von ellipsoidförmigen Körnern vorliegt, wobei die mittleren Abmessungen der Hauptachse und der Nebenachse vorzugsweise wie folgt sind:
- eine mittlere Abmessung der Hauptachse zwischen 1 und 10 mm, vorzugsweise zwischen 2 und 6 mm;
- eine mittlere Abmessung der Nebenachse zwischen 1 und 10 mm, vorzugsweise zwischen 2 und 6 mm.

13. Mehrschichtige Folie, die 2 dünne Schichten B und C aus einem thermoplastischen Material umfasst, die durch eine Haftschicht A miteinander verbunden sind, **dadurch gekennzeichnet, dass** die Schicht A aus der Heißschmelz-Haftkleberzusammensetzung gemäß der Definition in einem der Ansprüche 1 bis 12 besteht.

14. Mehrschichtige Folie nach Anspruch 13, **dadurch gekennzeichnet, dass** sie 5 Schichten umfasst, die aus der Haftschicht A, 2 zusätzlichen Schichten D und E und den 2 dünnen Schichten B und C mit der Abfolge B/D/A/E/C besteht, wobei das Zeichen "/" bedeutet, dass sich die Flächen der betreffenden Schichten in direktem Kontakt befinden.

15. Verwendung der mehrschichtigen Folie gemäß der Definition in Anspruch 13 oder 14 zur Herstellung von wiederverschließbaren Verpackungen.

## Claims

1. Hot-melt self-adhesive composition comprising:
- i) from 40% to 80% by weight of at least one but-1-ene-ethylene copolymer A, said copolymer comprising more than 80% by weight of units derived from but-1-ene;
- ii) from 1.5% to 4.5% by weight of at least one propylene-ethylene-butene copolymer T, said copolymer T comprising more than 50% by weight of units derived from propylene;
- iii) at least one nonhydrogenated tackifying resin obtained by polymerization, or copolymerization with an aromatic hydrocarbon, of mixtures of unsaturated aliphatic hydrocarbons having from 4 to 6 carbon atoms resulting from petroleum cuts.

2. Composition according to Claim 1, **characterized in that** it comprises from 45% to 80% by weight of copolymer(s) A, preferably from 50% to 80%, more preferentially still from 50% to 70%, by weight of copolymer(s) A, with respect to the total weight of said composition.

3. Composition according to either one of Claims 1 and 2, **characterized in that** the copolymer A has a polydispersity index (Mw/Mn) of less than or equal to 3, preferably ranging from 2 to 3.

4. Composition according to any one of Claims 1 to 3, **characterized in that** the copolymer A has a Shore A hardness of less than or equal to 90, preferably of less than or equal to 70 and more preferentially still of less than or equal to 65.

5. Composition according to any one of Claims 1 to 4, **characterized in that** the copolymer A comprises at most 20% by weight of units derived from ethylene, preferably at most 18% by weight of units derived from ethylene and more preferentially still at most 10% by weight of units derived from ethylene.

6. Composition according to any one of Claims 1 to 5, **characterized in that** it comprises from 1.8% to 4.3% by weight of copolymer(s) T, preferentially from 2.0% to 4.0% and more preferentially still from 2.0% to 3.5% by weight, with respect to the total weight of said composition.

7. Composition according to any one of Claims 1 to 6, **characterized in that** the copolymer T comprises more than 60% by weight of units derived from propylene, more preferentially more than 70% by weight of units derived from propylene and more preferentially still more than 80% by weight of units derived from propylene.

8. Composition according to any one of Claims 1 to 7, **characterized in that** the copolymer T can comprise from 1% to 25% by weight of units derived from ethylene, preferably from 1% to 10% by weight of units derived from ethylene and more preferentially still from 1% to 5% by weight of units derived from ethylene.

9. Composition according to any one of Claims 1 to 8, **characterized in that** the copolymer T comprises from 1% to 25% by weight of units derived from butene, preferably from 2% to 15% by weight of units derived from butene and more preferentially still from 5% to 12% by weight of units derived from butene.

10. Composition according to any one of Claims 1 to 9, **characterized in that** the total content of tackifying resin(s) iii) ranges from 18.5% to 58.5% by weight, preferably from 18.5% to 53.5% by weight, preferentially from 18.5% to 48.5% by weight and more preferentially still from 28.5% to 48.5% by weight, with respect to the total weight of said composition.

11. Composition according to any one of Claims 1 to 10, **characterized in that** it does not comprise a tackifying resin other than the tackifying resin(s) iii).

12. Composition according to any one of Claims 1 to 11, **characterized in that** it is provided in the form of granules of ellipsoidal shape, the mean dimensions of the major axis and of the minor axis of which are preferably as follows:
- mean dimension of the major axis of between 1 and 10 mm, preferably between 2 and 6 mm;
- mean dimension of the minor axis of between 1 and 10 mm, preferably between 2 and 6 mm.

13. Multilayer film comprising two thin layers B and C of thermoplastic material bonded together by an adhesive layer A, **characterized in that** said layer A consists of the hot-melt self-adhesive composition as defined in one of Claims 1 to 12.

14. Multilayer film according to Claim 13, **characterized in that** it comprises five layers consisting of the adhesive layer A, two additional layers D and E and the two thin layers B and C, according to the sequence B/D/A/E/C in which the "/" sign signifies that the faces of the layers in question are in direct contact.

15. Use of the multilayer film as defined in Claim 13 or 14, for the manufacture of reclosable packagings.
